# EUROPÄISCHE PATENTSCHRIFT

(11) **EP 3 034 386 B1**
(45) Veröffentlichungstag und Bekanntmachung des Hinweises auf die Patenterteilung: **05.02.2020**
(21) Anmeldenummer: 15201286.0
(22) Anmeldetag: 18.12.2015
(51) Int. Cl.: B62K 19/30

(54) **EINSATZ FÜR EINE ÖFFNUNG AN EINEM ROHR EINES ZWEIRAD-RAHMENS**
INSERT FOR AN OPENING ON A TUBE OF A BICYCLE FRAME
INSERT POUR OUVERTURE DANS UN TUBE D'UN CADRE DE DEUX ROUES

(30) Priorität: 18.12.2014 DE 102014119046
(43) Veröffentlichungstag der Anmeldung: 22.06.2016
(73) Patentinhaber: MPR GmbH & Co. KG, 95615 Marktredwitz (DE)
(72) Erfinder: Pürner, Marcus, 95615 Marktredwitz (DE)
(74) Vertreter: Friderichs, Gunther

(56) Entgegenhaltungen:
- EP-A2- 2 546 132
- WO-A1-2014/127476
- FR-A- 400 328
- FR-A- 437 272
- GB-A- 191 100 277
- US-A- 3 423 518
- US-A1- 2012 125 962
- US-A1- 2012 175 471

## Beschreibung

Die Erfindung betrifft allgemein einen Einsatz für eine Öffnung an einem Rohr, insbesondere an einem Rohr eines Zweirad-Rahmens. Der Einsatz ist dazu ausgebildet, die Öffnung abzudecken und/oder die Durchführung eines Zuges oder Kabels in das Rohr hinein oder aus dem Rohr heraus zu ermöglichen.

Bei vielen gängigen Zweirädern, etwa bei Mountainbikes oder Rennrädern, werden Schaltungen und Bremsen sowie zunehmend auch weitere Komponenten oder mechanische Züge bzw. Bowdenzüge betätigt. Häufig erfolgt die Betätigung der Züge über geeignete Vorrichtungen am Lenker, was eine einfache und vergleichsweise sichere Betätigung durch den Zweirad-Fahrer, insbesondere während der Fahrt, ermöglicht. Um die Züge vom Lenker zu den entsprechenden Schaltungen, Bremsen oder sonstigen Komponenten zu führen, werden die Züge im Allgemeinen entlang des Rahmens geführt.

Abschnittsweise werden die Züge dabei häufig auch innerhalb des Rahmens geführt, um zum einen die Züge zu schützen, zum anderen um etwa eine Verletzungsgefahr durch die offen liegenden Züge zu verringern oder auch den ästhetischen Eindruck insgesamt zu erhöhen.

Zunehmend kommen auch elektrisch betriebene oder elektrisch geschaltete Komponenten hinzu, etwa elektrische Schaltungen. Zur Signalübertragung, etwa vom Lenker zu der elektrischen Schaltung, werden daher auch elektrische Kabel erforderlich, welche ebenfalls an oder zumindest abschnittsweise im Rahmen geführt werden.
Zudem kann es, etwa bei einer Beschädigung eines Kabels oder Zuges, erforderlich werden, dass ein Kabel oder ein Zug ausgetauscht werden muss. Ebenso kann ein Austauschen im Zuge einer Umrüstung von Bauteilen erforderlich werden, etwa, wenn von einem mechanischen Zug auf einen hydraulischen Zug umgerüstet werden soll.

Besondere Bedeutung kommt bei der Verlegung des Zugs oder des Kabels der Übergang von einer Führung an oder außerhalb des Rahmens zu einer Führung in bzw. innerhalb eines Rahmens oder Rahmenabschnitts zu. Hierzu kann ein als Durchführung ausgebildeter Einsatz vorgesehen sein, durch den der Zug oder das Kabel in den Rahmen hinein bzw. heraus geführt werden kann.

Derartige Einsätze mit einer Durchführung für einen Zug oder ein Kabel sind grundsätzlich bekannt. Häufig sind die Einsätze derart ausgebildet, dass sie in eine passgenau gegengleiche Öffnung im Rahmen eingesetzt und dort formschlüssig verrastet oder mittels einer Zugspannung gehalten werden können.

So zeigt etwa das Dokument US 2012/0175471 A1 eine Vorrichtung zur Durchführung eines Zuges in einem Fahrradrahmen, wobei in einer Öffnung ein Klemmelement als Durchführung angeordnet ist. Der Einsatz wird unter prinzipbedingt nötiger Verformung des Klemmelements mit einer Schraube befestigt. Ferner wird die Verformung des Befestigungselements dieses Einsatzes durch eine Rampe bewirkt, deren Abmessungen und der zur Verformung des Befestigungselements nötige Verschiebeweg eine Mindesttiefe in Richtung senkrecht zur Oberfläche des Fahrradrahmens erfordern, welche die Anbringung dieser Vorrichtung zur Durchführung beispielsweise in der Nähe von weiteren Fahrradrahmenteilen, wie beispielsweise der Tretlageraufnahme oder dem Lenkkopfrohr erschweren oder unmöglich machen.

Kabel- oder Zugdurchführungen sind ferner in den Dokumenten FR 400 328 A, FR 437 272 A, GB 00277A, US 3,423,518 A, US 2012/125962 A1 und EP 2 546 132 A2 gezeigt.

Einen weiteren Einsatz zeigt das Dokument WO 2014/127476 A1. Der Einsatz weist dabei einen im Rahmeninneren liegenden Vorsprung auf, der nach Beaufschlagen mit einer Zugspannung ein Halten durch Formschluss ermöglicht. Als nachteilig kann angesehen werden, dass es aufgrund Formschlusses zum Halten erforderlich ist, dass die Bauteile passgenau gegengleich zueinander ausgebildet sind. Dies bedeutet, dass ein derartiger Einsatz nur für ganz bestimmt ausgebildete Rahmen, insbesondere in Bezug auf die Wandstärke oder den Querschnitt des Rahmens, geeignet ist. Dies wiederum führt dazu, dass die Einsätze nicht flexibel für eine Vielzahl von Rahmen verwendet werden können, sondern nur für ganz bestimmte. Hierdurch ist es wiederum erforderlich, eine Vielzahl von ähnlichen Einsätzen herzustellen und vorzuhalten, wobei es zudem auch leicht zu Verwechselungen bei der Montage kommen kann.

Weiterhin ungünstig ist es, dass häufig zum Halten eine zusätzliche Zugspannung auf den Einsatz aufgebracht werden muss, um einen festen Sitz des Einsatzes im Rahmen zu gewährleisten.

Wünschenswert wäre demnach ein Einsatz, der sowohl die Durchführung von Zügen als auch von elektrischen Kabeln ermöglicht und zudem einfach an Rahmen, insbesondere Zweirad-Rahmen, befestigt werden kann. Hierbei soll der Einsatz auch sicher an einem Rahmen befestigt werden können, ohne dass eine zusätzliche auf den Zug wirkende Zugspannung erforderlich ist.

Der Zug oder das Kabel soll weiterhin bei der Durchführung durch den Einsatz geklemmt werden können.

Der Einsatz soll an unterschiedlichen Rahmen, etwa an Rahmen mit unterschiedlichen Querschnitt oder verschiedenen Wandstärken, befestigt werden können und dabei die Öffnung vollständig abdecken. Dabei soll der Einsatz auch an Rahmen aus unterschiedlichen Materialien wie Aluminium oder Karbon befestigt werden können.

Weiterhin soll auch eine einfache Demontage sowie eine erneute Montage des Einsatzes möglich sein.

Überraschend einfach wird diese Aufgabe durch einen Einsatz für eine Öffnung an einem Rohr eines Zweirad-Rahmens nach Anspruch 1 gelöst.

Bevorzugte Ausführungsformen und Weiterbildungen der Erfindung sind den jeweiligen Unteransprüchen zu entnehmen. Die Erfindung betrifft demnach einen Einsatz für eine Öffnung an einem Rohr, insbesondere an einem Rohr oder einem Rohrabschnitt eines Zweirad-Rahmens. Der Einsatz ist ausgebildet zur vollständigen Abdeckung dieser Öffnung und/oder zur Durchführung eines Zuges oder Kabels durch die Öffnung in das Rohr hinein oder aus dem Rohr heraus, wobei die Öffnung bevorzugt auf der Mantelfläche des Rohres angeordnet ist. Nach erfolgter Montage in der Öffnung wird der Einsatz mittels Klemmung eines Abschnittes der Seitenwand des Rohres oder des Rohrabschnittes fest gehalten. Ein Zug oder ein Kabel kann bei Durchführung durch den Einsatz geklemmt werden.

Zweiräder moderner Bauart können Züge unterschiedlicher Funktionalität oder elektrische Kabel aufweisen, welche zumindest abschnittsweise entlang des Rahmens geführt werden, um die entsprechenden Bedienungseinheiten, welche häufig am Lenker angeordnet sind, mit den dazugehörigen Komponenten zu verbinden. Hierzu kann beispielsweise ein mechanischer Zug, etwa ein mechanischer Schalt- oder Bremszug, ein hydraulischer Zug, etwa für eine Sattelstütze, oder aber eine elektrische Leitung, beispielsweise zur Übertragung von Signalen, gehören.

Da häufig die Bedieneinheiten und die dazugehörigen Komponenten an verschiedenen Stellen oder Bereichen des Rahmens angeordnet sind, werden die Kabel oder Züge zumindest abschnittsweise am Zweirad-Rahmen entlang geführt. Hierbei bietet es sich aus verschiedenen Gründen an, soweit möglich die Züge und/oder Kabel - zumindest abschnittsweise - innerhalb des Zweirad-Rahmens zu verlegen.

Zum einen bietet dies ästhetische Vorteile, da der Rahmen so nicht von verschiedenen Zug- bzw. Kabelverlegungen belegt wird. Zum anderen ist auch die Verletzungsgefahr, beispielsweise infolge eines Hängenbleibens an einem Zug oder Kabel, geringer. Weiterhin sind die im Rahmen verlegten Züge oder Kabel auch besser vor Beschädigungen, etwa durch Hängenbleiben an Gegenständen, geschützt.

Der Einfachheit halber wird nachfolgend von Zügen bzw. von einer Zugverlegung gesprochen. Im Sinne der Erfindung sind hierunter sowohl mechanische Züge, etwa Brems- oder Schaltzüge, als auch hydraulische Züge oder hydraulische Leitungen, insbesondere an oder für ein Zweirad, zu verstehen. Die Erfindung umfasst ferner auch elektrische Leitungen, durch welche Schalt-, Steuer- oder Regelvorgänge, insbesondere an einem Zweirad, bewirkt werden können. Demnach umfasst die Erfindung alle Steuermittel, welche für das Bremsen, das Schalten, das Beschleunigen oder für Feder- oder Dämpfungselemente des Fahrwerks oder des Rahmens oder von dessen Anbauteilen wie Sattelstützen, insbesondere eines Zweirades, verwendet werden können.

Der erfindungsgemäße Einsatz umfasst dabei ein erstes Einsatzelement und ein zweites Einsatzelement. Ferner sieht der Einsatz zumindest ein Befestigungsmittel zum Befestigen des ersten und des zweiten Einsatzelements miteinander vor.

Der erfindungsgemäße Einsatz ermöglicht es, dass bei der Klemmung zumindest ein Abschnitt der Öffnung des Rohrs von außen durch eine gemeinsame Kontaktfläche mit dem ersten Einsatzelement und derselbe Abschnitt der Öffnung von innen durch eine gemeinsame Kontaktfläche mit dem zweiten Einsatzelement geklemmt werden.

Die Öffnung des Rohres, insbesondere eines Rohrs oder Rohrabschnittes eines Zweirad-Rahmens, kann beispielsweise als Bohrung ausgebildet sein. Besonders bevorzugt handelt es sich aber um Langlöcher, also eine längliche Bohrung, wobei die Längsseiten vorzugsweise parallel zur Mittenlinie des entsprechenden Rohrabschnittes verlaufen. Hierdurch kann ein Zug oder ein Kabel unter einem besonders günstigen Winkel in das Rohr hinein- oder herausgeführt werden, so dass ein Abknicken oder eine Beschädigung verhindert werden können.

Der Einsatz kann auch zur Abdeckung einer Öffnung, insbesondere eine Langlochs, an einem Rohr eines Zweirad-Rahmens verwendet werden. Dies ist vorteilhaft, wenn beispielsweise der Zweirad-Rahmen bereits mit Öffnungen versehen ist, durch die aber keine Züge oder Kabel geführt werden sollen.

Der erfindungsgemäße Einsatz kann dabei an Rohren unterschiedlichen Durchmessers und verschiedener Wandstärke montiert werden. So kann der Einsatz bei sehr dünnwandigen Rohren, etwa mit einer Wandstärke in einem Bereich ab 1 mm im Fall von Karbonrahmen, aber auch bei dickwandigeren Rahmen bis hin zu 5 mm Wandstärke verwendet werden, bevorzugt bis zu 4 mm Wandstärke, etwa im Fall von Aluminium-Profilen.

Der erfindungsgemäße Einsatz kann dabei fest und verdrehsicher in der Öffnung montiert werden, ohne dass eine Zugspannung auf einen durchgeführten Zug aufgebracht wird. Auch eine Verklebung des Einsatzes in der Öffnung ist nicht erforderlich, um einen festen und sicheren Sitz zu gewährleisten. Ebenso erfolgen auch keine Deformation oder Verformung des Einsatzes während der Montage oder einer möglichen Demontage.

Soweit verbleibende elastische Anteile dennoch zumindest im zweiten Einsatzelement minimalste Formänderungen bewirken sollten, sind diese nicht mit der in der US 2012/0175471 A1 offenbarten Vorrichtung vergleichbar oder gewollt, gemäß welcher eine wesentliche Verformung von deren Befestigungselement erst dessen Montage ermöglicht, sondern sind allenfalls im mikroskopischen Bereich nie zu vermeidende Formänderungen und sollen höchstens, falls überhaupt vorhanden, zumindest beim ersten Einsatzelement ein besseres oberflächliches Anschmiegen an Abschnitte des Fahrradrahmens ermöglichen aber sind keinesfalls Verformungen, durch welche eine Montage oder Demontage, beispielsweise des zweiten Einsatzelements erst bewirkt werden kann.

Gemäß der Erfindung sollen Verformungen wie in der US 2012/0175471 A1 offenbarten Vorrichtung, welche insbesondere dazu vorgesehen sind, ein seitliches Hintergreifen überhaupt erst zu ermöglichen, vermieden werden.

Erfindungsgemäß bleibt dabei zumindest das zweite Einsatzelement, welches in montierter Position im Wesentlichen innerhalb des Rohrs angeordnet ist und dessen Seitenwände derart ausgebildet sind, um in die Öffnung zumindest teilweise eingeschoben werden zu können, in der zweiten Position, somit in der Halteposition, in welcher die beiden Einsatzelemente zueinander festlegt sind, im Vergleich zur ersten Position, somit der Monatageposition deformationsfrei. Anderes als im vorbekannten Stand der Technik, bei welchem Einsatz- oder Befestigungselemente zur Montage zum Teil wie bei Spreitzdübeln erheblich verformt werden, kann gemäß dieser Ausgestaltung der Einsatz auch nach einer Demontage häufig wiederverwendet werden kann.

Das Befestigungsmittel ist dabei vorzugsweise derart ausgebildet, dass das erste und das zweite Einsatzelement mittels des Befestigungsmittels derart miteinander verbunden werden können oder verbunden sind, dass sie relativ zueinander zumindest in einer ersten Position und in einer zweiten, von der ersten abweichenden Position, gehalten werden können. Dies kann bedeuten, dass sie auch in einem ersten und in einem zweiten Abstand zueinander gehalten werden, wobei der erste Abstand betragsmäßig größer als der zweite Abstand ist.

Die erste Position legt eine räumliche Anordnung der beiden Einsatzelemente zueinander fest, die zur Montage des Einsatzes in der Öffnung geeignet ist und auch als Montageposition bezeichnet werden kann. Dies bedeutet, dass sich die beiden Einsatzelemente in einer vorher festgelegten Position oder in einem vorher festgelegten Abstand zueinander befinden. In der Montageposition können die beiden Einsatzelemente relativ zueinander bewegt werden. Diese Montageposition der Einsatzelemente erlaubt es, das zweite Einsatzelement zumindest teilweise durch die Öffnung des Rohres in das Rohr einzuschieben oder einzufügen und in eine vorbestimmte Position und Orientierung innerhalb des Rohres zu bringen.

Die zweite Position legt eine räumliche Orientierung der beiden Einsatzelemente zueinander fest, bei der der Einsatz fest in der Öffnung des Rohrs gehalten werden kann. Daher kann dieser Abstand auch für die vorliegende Erfindung als Halteposition bezeichnet werden. In der Halteposition können sich die beiden Einsatzelemente auch berühren; zumindest bilden sie aber jeweils eine gemeinsame Kontaktfläche mit zumindest einem Abschnitt der Seitenwand des Rohrs, insbesondere angrenzend an die Öffnung des Rohrs, und klemmen diesen Abschnitt.

Das erste Einsatzelement ist nach erfolgter Montage des Einsatzes am Rohr, also in der Halteposition, im wesentlichen außerhalb des Rohrs angeordnet, wohingegen das zweite Einsatzelement in montierter Position im wesentlichen innerhalb des Rohrs angeordnet ist.

Das erste Einsatzelement umfasst eine Unterseite, welche in der Halteposition in Richtung der äußeren Mantelfläche des Rohres weist und zumindest abschnittsweise mit diesem verbunden ist. Die Unterseite des ersten Einsatzelements bildet demnach in der Halteposition zumindest teilweise eine gemeinsame Kontaktfläche mit zumindest einem Abschnitt der äußeren Mantelfläche des Rohrs im Bereich der Öffnung. Um eine besonders stabile Verbindung zu schaffen, kann diese Kontaktfläche auch den die Öffnung des Rohres umgebenden Bereich der Mantelfläche vollständig umfassen. Die der Unterseite gegenüberliegende Oberseite des ersten Einsatzelementes weist in der montierten Position von dem Rohr weg.

Das zweite Einsatzelement umfasst eine Oberseite, welche in der Halteposition in Richtung Innenwand des Rohrs weist, sowie eine gegenüberliegende Unterseite. Die Ober- und Unterseite können von zumindest einer Seitenwand umgeben sein.

In einer günstigen Ausführungsform kann die Seitenwand vier Seitenwände umfassen, wobei sich jeweils zwei gegenüberliegen. Um in die Öffnung des Rohrs - zumindest teilweise - eingefügt bzw. eingeschoben werden zu können, weisen dabei in einer vorteilhaften Ausführungsform zwei sich gegenüberliegende Seitenwände einen Abstand zueinander auf, der es ermöglicht, durch die Öffnung des Rohres zumindest teilweise geschoben werden zu können. Demnach ist der Abstand zweier gegenüberliegender Seitenwände des zweiten Einsatzelements zumindest nicht größer als die lichte Weite des Rohrs.

Nach erfolgtem zumindest teilweisen Einschieben des zweiten Einsatzelementes in das Rohr können die Einsatzelemente zueinander und/oder passend zur Öffnung des Rohrs ausgerichtet werden. Durch Betätigen des Befestigungsmittels können die Orientierung der beiden Einsatzelemente zueinander verändert und/oder der Abstand der Einsatzelemente zueinander verringert werden, um diese in die Halteposition zu bewegen. In der Halteposition klemmen das erste und das zweite Einsatzelement zumindest einen Abschnitt der Seitenwand des Rohrs, insbesondere in einem Abschnitt, welcher direkt an die Öffnung des Rohrs angrenzt, von innen und von außen.

Die Unterseite des ersten Einsatzelements bildet also eine gemeinsame Kontaktfläche mit einem Abschnitt der äußeren Mantelfläche, also der äußeren Seitenwand, des Rohres, wohingegen die Oberseite des zweiten Einsatzelements eine gemeinsame Kontaktfläche mit einem Abschnitt der inneren Seitenwand bildet. Diese beiden Kontaktflächen liegen demnach an sich gegenüberliegenden Bereichen der Seitenwand.

Die Seitenwand des Rohrs wird also von dem ersten Einsatzelement von außen und dem zweiten von innen an sich gegenüberliegenden Bereichen der Seitenwand, vorzugsweise in einem an die Öffnung angrenzenden Abschnitt, geklemmt. Dieser Abschnitt wird nachfolgend auch als Klemmabschnitt bezeichnet. Die erforderliche Klemmkraft wird dabei durch eine Druckspannung, welche durch das Befestigungsmittel aufgebracht wird, bewirkt.

In einer weiteren bevorzugten Ausführungsform kann die Seitenwand in zumindest einem weiteren, bevorzugt dem ersten Klemmabschnitt gegenüberliegenden, Abschnitt durch den Einsatz geklemmt werden. Diese beiden Klemmabschnitte sind bevorzugt entlang der Mittenlinie des Rohrs angeordnet, um einen besonders stabilen Sitz des Einsatzes in der Öffnung auch unter Belastungssituationen wie einer Zugspannung auf den Zug oder einer Zugkraft entlang der Mittenlinie des Rohrs zu gewährleisten.

Das erste und/oder das zweite Einsatzelement können auch in einer bevorzugten Ausführung einen umlaufenden Vorsprung aufweisen, welcher in der Halteposition zumindest teilweise in die Öffnung eingeschoben sein kann. Besonders vorteilhaft greift dieser Steg in der Halteposition formschlüssig in die Öffnung des Rohres ein. Hierdurch können ein besonders stabiler Sitz des Einsatzes in der Öffnung und eine Verdrehsicherheit gegenüber der Öffnung erreicht werden. Zudem kann ein ungewolltes Lösen des Einsatzes aus der Öffnung, etwa bei nicht ausreichender Klemmkraft oder durch eine von außen auf den Einsatz wirkende Kraft, besser verhindert werden.

Als Befestigungsmittel kann beispielsweise eine Schraube verwendet werden, welche in ein Innengewinde des zweiten Einsatzelements eingreift und durch eine entsprechende Durchgangsbohrung mit Eingangsphase des ersten Einsatzelements gehalten werden kann. Das zweite Einsatzelement kann demzufolge mit einem geeigneten Innengewinde ausgebildet sein.

Wichtig ist in der Montageposition der beiden Einsatzelemente, dass eine hinreichende Beweglichkeit der beiden Einsatzelemente zueinander während der Montage in der Öffnung des Rohrs ermöglicht wird. Im Allgemeinen ist hierzu ein minimaler Abstand der beiden Einsatzelemente zueinander erforderlich, um eine ausreichende Beweglichkeit und einen hinreichend großen Spielraum für die Montage zu erhalten.

In der Halteposition wird der Einsatz in der Öffnung des Rohres durch Klemmung zumindest eines Abschnittes der Seitenwand des Rohrs mittels der beiden Einsatzelemente gehalten. Der Abstand der beiden Einsatzelemente in Halteposition wird im Wesentlichen durch die geometrische Ausbildung der Unterseite des ersten Einsatzelementes und der Oberseite des zweiten Einsatzelements sowie die Wandstärke und die Krümmung des Rohres im Bereich der Öffnung bestimmt.

Das erste Einsatzelement kann in einer weiteren bevorzugten Ausführungsform einen kragenförmig umlaufenden Vorsprung aufweisen, welcher in der Halteposition die Öffnung des Rohrs vollständig überdeckt bzw. abdeckt. Besonders günstig ist es, wenn dieser umlaufende Vorsprung die Öffnung vollständig auf allen Seiten umgibt und dabei bündig abschließt. So ist es beispielsweise möglich, eine in dem Zweirad-Rahmen bereits vorhandene Öffnung zu verschließen und diese vor Verunreinigungen, etwa vor hereinfallenden Gegenständen, zu schützen. In dieser Funktion kann der Einsatz sehr gut zur Abdeckung und/oder als Deckel zum Verschließen der Rohröffnung verwendet werden.

In einer weiteren bevorzugten Ausführungsform kann der Einsatz zur Durchführung eines Zugs oder eines Kabels verwendet werden. Hierzu kann der Einsatz mit einer Durchgangsbohrung zur Durchführung eines Kabels ausgebildet sein.

Der Einsatz kann auch zumindest eine Durchgangsbohrung mit einem Anschlag zur Durchführung eines mechanischen Zugs umfassen. Ebenso kann der Einsatz zumindest eine Durchgangsbohrung zur Durchführung einer hydraulischen Leitung umfassen.

Die Durchgangsbohrung kann dabei sowohl das erste als auch das zweite Einsatzelement betreffen, um das Kabel oder den Zug durch den Einsatz führen zu können. Sofern die Durchgangsbohrung zur Durchführung beide Einsatzelemente betrifft, so sind diese beiden Durchgangsbohrungen in den beiden Einsatzelementen vorzugsweise derart angeordnet, dass sie in der Halteposition des Einsatzelementes zueinander fluchten, so dass das Kabel oder der Zug gerade durch das Einsatzelement geführt werden können.

In einer weiteren bevorzugten Ausführungsform ist die Durchgangsbohrung zur Durchführung des Zuges oder des Kabels innen, zumindest abschnittsweise, mit einem elastischen Material ausgekleidet, welches die lichte Weite der Durchgangsbohrung reduziert. Hierdurch können das Kabel oder der Zug bei der Durchführung durch das Einsatzelement in diesem Bereich geklemmt und gehalten werden.

In einer weiteren bevorzugten Ausführungsform kann der Einsatz auch wahlweise mehr als eine Durchgangsbohrung umfassen, beispielsweise eine Durchgangsbohrung zur Durchführung eines Kabels und eine weitere zur Durchführung eines Zuges. Bevorzugt sind diese Durchgangsbohrungen parallel zueinander angeordnet.

Bei einer Verwendung des erfindungsgemäßen Einsatzes für eine Zug- oder Kabelverlegung ist es vorteilhaft, wenn der Zug oder das Kabel unter einem bestimmten Winkel in das Rohr hinein- bzw. wieder herausgeführt werden. Hierdurch kann ein ungewolltes Knicken oder eine Beschädigung des Einsatzes, des Kabels oder des Zuges, welcher auch unter einer Zugspannung stehen kann, verhindert werden. Vorteilhaft ist es daher, wenn die Mittenlinie der Durchgangsbohrung und die Mittenlinie des Rohrs in einem Winkel zueinander stehen, welcher zwischen 10° und 45°, bevorzugt zwischen 15° und 40° beträgt.

Der Einsatz kann aus verschiedenen Materialien gefertigt werden, wobei stabile Leichtgewichtsmaterialien im Allgemeinen bevorzugt werden. Hierzu gehören insbesondere die Materialien Aluminium, Kunststoff, Karbon oder faserverstärkter Kunststoff oder Mehrkomponentenkunststoff, aus denen der Einsatz gefertigt werden kann.

Die beiden Einsatzelemente können beispielsweise kostengünstig und in großen Stückzahlen im Spritzguss-Verfahren hergestellt werden, da sie für unterschiedliche Wandstärken der Rahmen und verschiedene Rohrdurchmesser verwendet werden können.

Die Erfindung betrifft ferner einen Rahmen, insbesondere für ein Zweirad, welcher zumindest eine Öffnung in zumindest einem Rahmenabschnitt und zumindest einen erfindungsgemäßen Einsatz umfasst, welcher in der Öffnung montiert ist und zur Abdeckung der Öffnung und/oder zur Durchführung eines mechanischen Zuges, eines Kabels und/oder einer hydraulischen Leitung von außen nach innen in den Rahmen oder umgekehrt von innerhalb des Rahmens nach außerhalb dient.

Die Erfindung betrifft weiterhin ein Zweirad mit zumindest einem mechanischen Zug, einem Kabel und/oder einer hydraulischen Leitung, wobei der mechanische Zug und/oder das Kabel und/oder die hydraulische Leitung zumindest abschnittsweise außerhalb und zumindest in einem Abschnitt innerhalb des Rahmens geführt werden, und wobei zur Durchführung in den Rahmen hinein oder aus dem Rahmen heraus ein erfindungsgemäßer Einsatz vorgesehen ist oder verwendet wird.

Weitere Einzelheiten der Erfindung ergeben sich aus der Beschreibung der dargestellten Ausführungsbeispiele und den angefügten Ansprüchen.

### Die Zeichnungen zeigen:

- Fig. 1: einen Ausschnitt eines Zweirad-Rahmens mit einem Rohrabschnitt sowie zwei erfindungsgemäßen Einsätzen,
- Fig. 2: eine erste besonders bevorzugte Ausführungsform eines Einsatzes in Halteposition zur Durchführung eines mechanischen Zuges in einem Teilschnitt in Längsrichtung,
- Fig. 3: den Einsatz in einem weiteren Teilschnitt in Querrichtung,
- Fig. 4: den Einsatz in Montageposition in einem Teilschnitt in Längsrichtung,
- Fig. 5: den Einsatz in Montageposition in einer Seitenansicht,
- Fig. 6: eine Schrägansicht des Einsatzes,
- Fig. 7: den in Fig. 5 dargestellten Einsatz in Montageposition im Schnitt in einer Queransicht,
- Fig. 8: eine weitere bevorzugte Ausführungsform eines Einsatzes mit einer Durchgangsbohrung zur Durchführung eines Zuges mit zusätzlicher Klemmung,
- Fig. 9: den Einsatz in Montageposition in einer Seitenansicht im Schnitt in Längsrichtung,
- Fig. 10: den Einsatz in Montageposition in einer Seitenansicht in Längsrichtung,
- Fig. 11: den Einsatz in Montageposition in Querrichtung in einem Teilschnitt,
- Fig. 12: ein weiteres bevorzugtes Ausführungsbeispiel eines Einsatzes im Längsschnitt,
- Fig. 13: ein weiteres bevorzugtes Ausführungsbeispiel eines Einsatzes im Längsschnitt,
- Fig. 14: ein weiteres bevorzugtes Ausführungsbeispiel eines Einsatzes mit einem federnden Klemmelement,
- Fig. 15: ein weiteres bevorzugtes Ausführungsbeispiel eines Einsatzes zur Abdeckung einer Öffnung, und
- Fig. 16: eine Weiterbildung der Erfindung mit einem Einsatz zur Durchführung von mehr als einem Zug oder Kabel.

### Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen.

Es ist dem Fachmann ersichtlich, dass die Erfindung nicht auf die vorstehend anhand der Figuren beschriebenen lediglich beispielhaften Ausführungsformen beschränkt ist, sondern in vielfältiger Weise im Rahmen des Gegenstandes der Patentansprüche variiert werden kann. Insbesondere können auch die Merkmale einzelner Ausführungsbeispiele miteinander kombiniert werden.

Zur besseren Verdeutlichung der Erfindung sind die in den Figuren dargestellten bevorzugten Ausführungsformen jedoch nicht immer maßstabsgerecht gezeichnet.

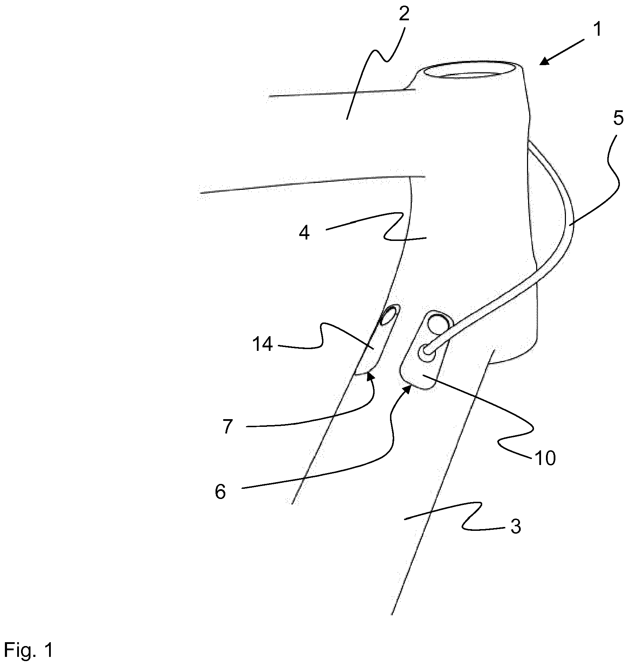

Fig. 1 zeigt einen Ausschnitt eines Rahmens 1 einer ersten Ausführungsform einer erfindungsgemäßen Zugverlegung, welche besonders für das Verlegen von mechanischen Zügen geeignet ist und bei welcher ein Zug zunächst außerhalb des Rahmens und sodann mittels eines erfindungsgemäßen Einsatzes 10 in den Rahmen hinein geführt wird.

Der Rahmen 1 der gezeigten Ausführungsform betrifft einen klassischen Zweirad-Rahmen mit einem Oberrohr 2, einem Unterrohr 3 sowie einem Steuerrohr 4. Ein mechanischer Zug 5 ist dargestellt und führt, von oberhalb des Rahmens 1 kommend, außerhalb zumindest teilweise um den Rahmen 1 oder das Steuerrohr 4 herum. Der Zug 5 wird demnach in diesem Rahmenabschnitt außerhalb des Rahmens 1 geführt.

Etwa ab dem Bereich, in dem das Unterrohr 3 in das Steuerrohr 4 übergeht, wird der Zug 5 innerhalb des Zweirad-Rahmens, insbesondere in einem Abschnitt des Unterrohrs 3, weitergeführt. Zur Durchführung des Zugs 5 durch eine zur Durchführung vorgesehene Öffnung 6 des Rohrs 3, wobei sich die Öffnung im Bereich der Mantelfläche des Rohrs 3 befindet, ist ein erfindungsgemäßer Einsatz 10 vorgesehen.

Die Öffnung 6 auf der Seitenwand des Rohrs kann als Bohrung oder als Langloch ausgeführt sein, im abgebildeten Beispiel handelt es sich um ein Langloch, wobei die Längsachse des Langlochs vorteilhaft parallel zur Mittenlinie des Rohrs 5 ausgerichtet ist. Langlöcher, insbesondere Langlöcher mit dieser Orientierung in Bezug zur Mittenlinie des Rohrs, durch die ein Zug oder Kabel geführt werden sollen, bieten den Vorteil, den Zug oder das Kabel während der Durchführung durch die Öffnung in einem Winkel zu der Mittenachse des Rohrs zu führen, welcher Beschädigungen weitgehend ausschließt. Hierdurch können ein Knicken des Kabels oder des Zuges oder sonstige Beschädigungen im Bereich der Durchführung verhindert werden.

Im montierten Zustand deckt der Einsatz 10 die Öffnung 6 vollständig ab, so dass die Öffnung im Rahmen nicht von außen sichtbar ist. Neben diesem ästhetischen Vorteil ist hierdurch besonders günstig auch ein Schutz des Innenraums des Rohres bzw. des Rahmens, insbesondere gegen Eintreten von Feuchtigkeit oder kleineren Gegenständen, gegeben.

Der mechanische Zug 5 kann beispielsweise zu einem mechanisch zu betätigenden Umwerfer gehören, wobei die zugehörige Schalteinheit am Lenker (nicht dargestellt) befestigt sein kann und mittels des Zugs 5 die Schaltsignale zu dem Umwerfer (nicht dargestellt) übertragen werden können.

Mittels eines Einsatzes 10 kann der Zug in das Rohr, insbesondere in den Rahmen des Zweirades, eingeführt und/oder herausgeführt werden. Hierzu umfasst der Einsatz eine Durchgangsbohrung zur Durchführung des Zugs. Anstelle eines mechanischen Zuges 5 kann auch ein hydraulischer Zug oder ein elektrisches Kabel mittels eines Einsatzes 10 entlang des Rahmens verlegt werden.

Im dargestellten Beispiel umfasst der Zweirad-Rahmen 1 eine weitere Öffnung 7 in Form eines Langlochs. Dieses ist im Zuge der Herstellung des Rahmens gefertigt worden und ist vorgesehen als Reserve, für eine spätere Umrüstung oder eine spätere zusätzliche Zug- oder Kabelverlegung. Zum Schutz des Innenraumes des Rahmens 1 ist diese Öffnung mit einem weiteren Einsatz 14 verschlossen. Dieser Einsatz 14 ist als Deckel ausgebildet. Der Einsatz 14 ist daher mit einem kragenförmig umlaufenden Vorsprung ausgebildet, welcher die Öffnung 7 vollständig abdeckt. Für eine Verbesserung der Abdichtung kann der Einsatz auch mit einem gummielastischen Material im Kontaktbereich mit der Öffnung 7 ausgebildet sein, so dass auch bei unterschiedlichen Rohrdurchmessern eine gute Abdichtung gewährleistet ist.

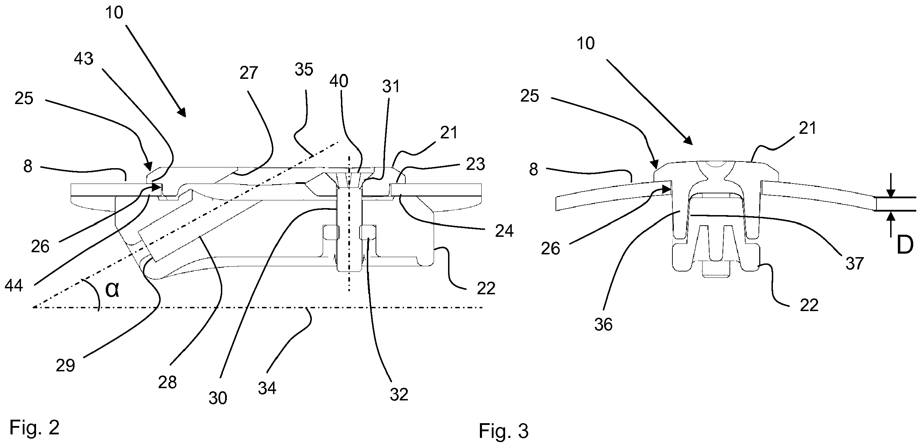

Fig. 2 zeigt eine erste besonders bevorzugte Ausführungsform eines Einsatzes 10 in einem Teilschnitt in Längsrichtung, welcher zur Durchführung eines mechanischen Zuges 5 ausgebildet ist. Der Einsatz 10 ist dabei in einer montierten Position, also in der Halteposition, gezeigt und deckt dabei eine längliche Öffnung 6, welche auf der Mantelfläche eines Rohrs 8 angeordnet ist, ab. Dieses Langloch ist dazu ausgebildet, einen Zug oder ein Kabel in das Rohr 8 einzuführen. Das Rohr 8 kann dabei jedes Rohrs eines Zweirad-Rahmens betreffen, beispielsweise ein Unterrohr oder ein Sattelrohr. Das Rohr kann dabei vorteilhaft eine Öffnung zum Einführen des Zuges oder Kabels für eine abschnittsweise Verlegung innerhalb des Rohres sowie eine weitere Öffnung zum Ausführen des Zuges oder des Kabels umfassen. Selbstverständlich können das Rohr bzw. der Zweirad-Rahmen auch mehrere Öffnungen umfassen, welche zur Verlegung von Zügen oder Kabeln in dem Rahmen vorgesehen sind.

Der Einsatz 10 umfasst ein erstes Einsatzelement 21, welches sich im Wesentlichen in montierter Position außerhalb des Rohres 8 befindet, sowie ein zweites Einsatzelement 22, welches sich in der montierten Position im Wesentlichen im Inneren des Rohrs 8 befindet. Vorteilhaft bleibt zumindest das zweite Einsatzelement 22, welches in montierter Position im wesentlichen innerhalb des Rohrs angeordnet ist und dessen Seitenwände derart ausgebildet sind, um in die Öffnung des Rahmens zumindest teilweise eingeschoben werden zu können, in der zweiten Position, somit in der Halteposition, in welcher die beiden Einsatzelemente 21, 22 zueinander festlegt sind, im Vergleich zur ersten Position, somit der Monatageposition deformationsfrei.

Da jeglicher Körper sich unter Krafteinwirkung in dessen Form ändert, wenn auch nur im mikroskopischen Bereich, soll der Begriff deformationsfrei im Sinne dieser Erfindung zunächst grundlegend festlegen, dass eine Formänderung zur Verwirklichung dieser Erfindung weder nötig noch vorteilhaft ist.

Als noch deformationsfrei wird im Sinne dieser Erfindung eine Formänderung in einer bestimmten Richtung eines kartesischen Koordinatensystems mit X-, Y-, und Z-Achse verstanden, in welcher ein jeweiliges Einsatzelement angeordnet ist, bei welcher diese Formänderung des Einsatzelements in jeder Richtung dieses Koordinatensystems kleiner bleibt als 10 %, bevorzugt kleiner bleibt als 5 % und besonders bevorzugt kleiner bleibt als 2% der maximalen Abmessungen des Einsatzelements in dieser Richtung.

Dies bedeutet auch, dass selbst bei maximaler Krafteinwirkung durch das Befestigungsmittel keine Deformationen im zweiten Einsatzelement 22 erzeugt werden, welche dieses so verbiegen, dass hierdurch ein nach vorn gezogener Abschnitt des zweiten Einsatzelements mehr als 10 %, sondern insbesondere bevorzugt weniger als 5 % und besonders bevorzugt weniger als 2% der Größe seiner Abmessungen in dieser Befestigungsrichtung formverändert wird. Insbesondere bei Carbon-Fahrradrahmen, welche auf Druckspannungen sprödbrüchig reagieren können, ist dieses sowohl für eine sichere Montage als auch für eine zuverlässige Dauerbetriebsfestigkeit von großem Vorteil.

Das erste und das zweite Einsatzelement sind mit einem Befestigungsmittel miteinander verbunden. Vorgesehen ist in diesem Beispiel eine Befestigung mittels einer Schraube 40. Hierzu ist das erste Einsatzelement mit einer entsprechenden Durchgangsbohrung 31 zur Aufnahme eines Schraubenkopfes ausgebildet. Das zweite Einsatzelement weist ebenfalls eine Durchgangsbohrung 30 auf, durch die die Schraube geführt werden kann. Eine Ausnehmung ist für die verdrehsichere Aufnahme einer Mutter 32 vorgesehen, in die die Schraube eingeführt werden kann. Beide Durchgangsbohrungen sind derart angeordnet, dass sie in der Halteposition fluchtend zueinander liegen.

Durch Anziehen der Schraube kann der Abstand zwischen beiden Einsatzelementen verringert werden. Durch Anziehen der Schraube können die zur Seitenwand des Rohrs 8 weisende Unterseite des ersten Einsatzelements 21 und die zur Innenwand des Rohrs 8 hinweisende Oberseite des zweiten Einsatzelements jeweils eine Kontaktfläche mit dem Rohr 8 ausbilden, wodurch eine Klemmung erfolgt. In der Halteposition klemmt demnach der Einsatz einen Abschnitt der Seitenwand des Rohrs 8, bevorzugt angrenzend an die Öffnung 6. Die beiden Kontaktflächen 23, 24 zwischen der äußeren bzw. inneren Seitenwand des Rohrs 8 und dem ersten bzw. zweiten Einsatzelement bilden somit einen Klemmabschnitt.

Besonders günstig erfolgt eine weitere Klemmung an zumindest einem weiteren Abschnitt der Seitenwand, welche dem ersten Klemmabschnitt gegenüberliegen kann. In dem abgebildeten Beispiel wird eine weitere Kontaktfläche 43 zwischen dem ersten Einsatzelement 21 und der äußeren Seitenwand des Rohrs 8 sowie eine gegenüberliegende Kontaktfläche 44 zwischen dem zweiten Einsatzelement 22 und einem Abschnitt der Innenseite der Seitenwand des Rohrs 8 gebildet, so dass ein zweiter Klemmabschnitt entsteht. Hierdurch ist ein besonders stabiler Sitz des Einsatzes 10 in der Öffnung 6 gewährleistet, auch unter Zug- oder Druckspannungen, welche insbesondere parallel zur Mittenlinie 34 des Rohrs wirken können.

Das erste Einsatzelement 21 umfasst ferner einen Vorsprung oder vorspringenden Kragen 25. Im Beispiel ist dieser Kragen 25 umlaufend ausgebildet, um die Öffnung vollständig abzudecken. Die zur Seitenwand des Rohrs hinweisende Fläche des Kragens 25 kann optional mit einem gummielastischen Material für eine optimale Abdeckung ausgestattet sein.

Ferner umfasst das erste Einsatzelement 21 einen Steg 26, der umlaufend ausgebildet sein kann. Dieser Steg 26 ist vorteilhaft derart ausgebildet, dass er in montierter Position einen formschlüssigen Sitz in der Öffnung hat. Hierdurch können die Stabilität und die Festigkeit des Einsatzes in der Halteposition nochmals deutlich gesteigert werden. Dies ist insbesondere bei mechanischen Zügen hilfreich, welche häufig einer Zug- oder Druckspannung ausgesetzt sind.

Zur Durchführung des Zuges ist der Einsatz mit einer Durchgangsbohrung ausgestattet. Diese umfasst eine Durchgangsbohrung 27 in dem ersten Einsatzelement 21 sowie eine passgenau und in der Halteposition fluchtend hierzu ausgebildete zweite Durchgangsbohrung 28, welche in dem zweiten Einsatzelement 22 angeordnet ist. Optional kann ein Anschlag 29 für mechanische Züge 5 vorgesehen sein.

Um ein Abknicken oder Brechen eines durch die Öffnung geführten Zugs oder Kabels zu vermeiden, ist es sinnvoll, den Zug 5 oder das Kabel unter einem bestimmten Winkel durch die Öffnung 6 zu führen. Dieser als α bezeichnete Winkel wird zwischen der Mittenlinie 34 des Rohrs 8 und der Mittenlinie 35 der Durchgangsbohrung 27, 28 gebildet. Günstig ist es, wenn der Winkel α kleiner als 60° ist, bevorzugt liegt er zwischen 10° und 45°, und besonders bevorzugt zwischen 15° und 40°.

In Fig. 3. ist der Einsatz 10 in einem weiteren Teilschnitt im Querschnitt gezeigt. Der Kragen 25 ist bei diesem Einsatz 10 umlaufend ausgebildet und umgibt die Öffnung 6 des Rohrs 8 vollständig, um eine vollständige Abdeckung der Öffnung zu gewährleisten. Ebenso ist der Steg 26 vollständig umlaufend ausgebildet, um in der Halteposition formschlüssig einen optimalen Sitz des Einsatzelements in der Öffnung zu gewährleisten. Auf diese Weise kann der Einsatz besonders stabil und verdrehsicher in der Öffnung gehalten werden. Im abgebildeten Beispiel ist lediglich das erste Einsatzelement mit einem derartigen Steg 26 ausgebildet. Selbstverständlich kann auch das zweite Einsatzelement einen derartigen Steg aufweisen, welche in der montierten Position in die Öffnung eingreift.

Optional kann ein Einsatzelement mit zwei Schenkeln ausgebildet sein, welche in der Montageposition in eine hierzu passgenau gegengleich ausgebildete Aufnahme des anderen Einsatzelements eingreift. Im abgebildeten Beispiel umfasst das erste Einsatzelement 21 an seiner Unterseite zwei derartige Schenkel 36, welche passgenau gegengleich zu einer Aufnahme 37 an der Oberseite des zweiten Einsatzelements ausgebildet sind.

Der Einsatz kann für verschiedene Rohre, insbesondere in Bezug auf das Material, den Rohrdurchmesser sowie die Wandstärke des Rohrs, verwendet werden. Bei für Zweirad-Rahmen 1 verwendeten Rohren hängen der Durchmesser und die Wandstärke D unter anderem von dem gewählten Material ab. So sind beispielsweise sehr leichte und stabile KarbonRahmen bekannt, wobei die Rohre eine Wandstärke im Bereich von 1 mm aufweisen können. Bei Zweirad-Rahmen aus Aluminium-Rohrprofilen kann die Wandstärke dagegen dicker sein, etwa in einem Bereich von 3 mm.

Der erfindungsgemäße Einsatz kann zugleich bei unterschiedlichen Wandstärken D des Rohrs 8 verwendet werden, wobei eine günstige Wandstärke D zwischen 0,9 mm und 5 mm, bevorzugt zwischen 1,0 und 4,0 mm liegt.

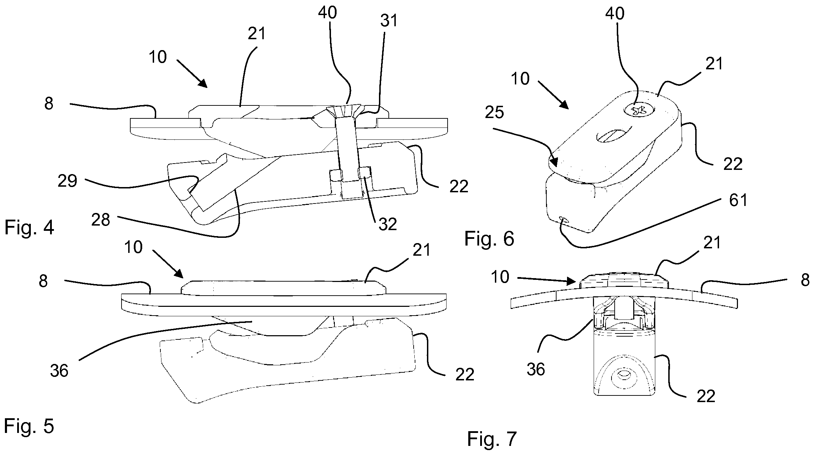

Fig. 4 zeigt einen Einsatz 10 in der Montageposition in einem Teilschnitt in Längsrichtung. Der Einsatz 10 ist zur Durchführung eines mechanischen Zuges mit einem Anschlag 29 in der Durchgangsbohrung 28 ausgebildet. Die Montageposition bezeichnet einen Abstand der beiden Einsatzelemente 21, 22 zueinander, welcher eine Montage in der Öffnung des Rohrs 8 ermöglicht. Insbesondere ist durch diesen Abstand zu gewährleisten, dass das zweite Einsatzelement 22 in die Öffnung des Rohres eingeschoben werden kann.

Im Beispiel ist eine Schraube 40 als Befestigungsmittel vorgesehen, welche von außerhalb des Rohrs durch eine Durchgangsbohrung 31 des ersten Einsatzelementes 21 geführt und in ein Gewinde in dem zweiten Einsatzelement 22 eingedreht werden kann. Anstelle des Gewindes kann auch eine verdrehsicher gehaltene Mutter 32 vorgesehen sein. Besonders günstig ist dabei die Durchgangsbohrung 31 für die Schraube mit einer Phase ausgebildet, welche ein gewisses Spiel in Längsrichtung erlaubt, so dass ein Verschwenken des ersten Einsatzelements 21 in der Montageposition relativ zu dem zweiten Einsatzelement 22 ermöglicht wird. Dies erleichtert die Einführung des zweiten Einsatzelements 22 in die Öffnung und die Montage. In Fig. 5 ist der Einsatz 10 in der Montageposition in einer Seitenansicht gezeigt. In montierter Position liegt die Unterseite des ersten Einsatzelements 21 vollständig bündig auf der Mantelfläche des Rohrs 8 auf, um die Öffnung in dem Rohr dicht zu schließen.

In Fig. 6 ist eine Schrägansicht eines Einsatzes 10 mit einem ersten Einsatzelement 21 und einer Teilansicht des zweiten Einsatzelement 22 gezeigt. Erkennbar ist die von außerhalb einführbare Schraube 40 zum Verbinden der beiden Einsatzelemente 21, 22 miteinander. In dieser Darstellung ist ferner der umlaufende Kragen 25 gut zu erkennen, der auf der Mantelfläche des Rohrs aufliegt und das Langloch vollständig abdeckt. Ferner ist das in der montierten Position in das Rohrinnere führende Ende der Durchgangsbohrung 61 zu erkennen, durch die der Zug in das Rohr geleitet wird.

In Fig. 7 ist der in Fig. 5 dargestellt Einsatz 10 in Montageposition im Schnitt in einer Queransicht gezeigt. In der Montageposition kann der Einsatz 10 mit seinem zweiten Einsatzelement 22 in die Öffnung des Rohrs 8 eingeschoben werden. Während der Montage wird das zweite Einsatzelement 22 dabei durch das Befestigungsmittel gehalten, so dass es sich nicht lösen und in das Rohr fallen kann.

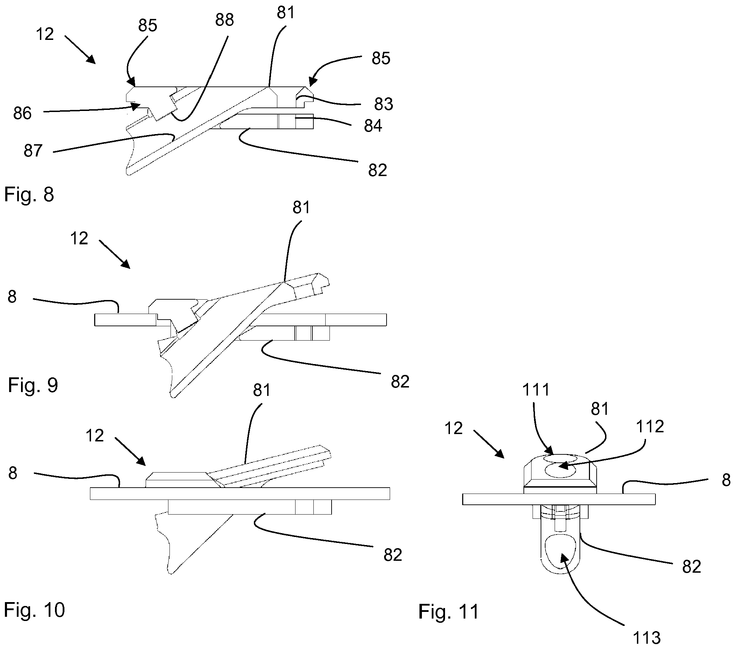

In Fig. 8 ist eine weitere bevorzugte Ausführungsform eines Einsatzes 12 mit einer Durchgangsbohrung 87 zur Durchführung eines Zuges mit einer zusätzlichen Klemmung gezeigt. Der Einsatz 12 umfasst ein erstes Einsatzelement 81 und ein zweites Einsatzelement 82, welche in der Halteposition gezeigt sind. Die beiden Einsatzelemente sind derart ausgebildet, dass sie in der Halteposition zumindest teilweise ineinander greifen. Hierdurch wird erreicht, dass die Durchgangsbohrung 87 zur Durchführung des Zuges nur in einem, hier dem zweiten Einsatzelement 82, ausgeführt zu werden braucht. Bei dieser Ausführungsform ist es hierdurch möglich, zusätzlich eine Klemmung des durch die Durchgangsbohrung 87 geführten Zuges oder Kabels durch ein in Halteposition zusätzlich wirkendes Klemmstück 88 zu erreichen.

Durch das Ineinandergreifen der beiden Einsatzelemente 81, 82 in der Halteposition bilden beide Einsatzelemente eine Kontaktfläche zur äußeren Seitenwand aus. Daher ist es günstig, beide Einsatzelemente in dem jeweils außen liegenden Bereich mit einem umlaufenden Vorsprung oder Kragen 85 auszubilden, so dass die Öffnung des Rohres 8 bei montierten Einsatz 12 vollständig abgedeckt werden kann. Ebenso ist es günstig, die beiden Einsatzelemente so auszubilden, dass ein formschlüssiger Sitz in der Öffnung des Rahmenrohrs gewährleistet wird. Hierzu ist der Steg 86 vorgesehen. Das Einsatzelement 81 umfasst ferner eine Durchgangsbohrung zur Aufnahme einer Schraube (nicht dargestellt), um beide Einsatzelemente 81, 82 miteinander zu verbinden.

Im abgebildeten Beispiel ist die Durchgangsbohrung 84 in dem zweiten Einsatzelement 82 mit einem Innengewinde zur Aufnahme der Schraube ausgestattet.

Fig. 9 zeigt den Einsatz 12 in der Montageposition in einer Seitenansicht im Schnitt in Längsrichtung.

In Fig. 10 ist der Einsatz 12 in der Montageposition aus Fig. 9 in einer Seitenansicht in Längsrichtung gezeigt.

Fig. 11 zeigt den Einsatz 12 in der Montageposition in Querrichtung in einem Teilschnitt. Zu erkennen ist die Durchgangsbohrung 111 zur Aufnahme der Schraube in dem Einsatzelement 81. Ferner sind die beiden Öffnungen 112, 113 der Durchgangsbohrung 87 zur Durchführung des Zuges oder des Kabels erkennbar. Die Durchgangsbohrung 87 ist bei dieser Ausführungsform nicht kreisförmigen Querschnitts, sondern tropfenförmig ausgebildet und läuft zum Rohrinneren ein einem kleineren Radius zusammen. Hierdurch kann eine bessere Klemmung des Zuges oder des Kabels in der Durchgangsbohrung 87 mittels des Klemmstückes 88 erreicht werden.

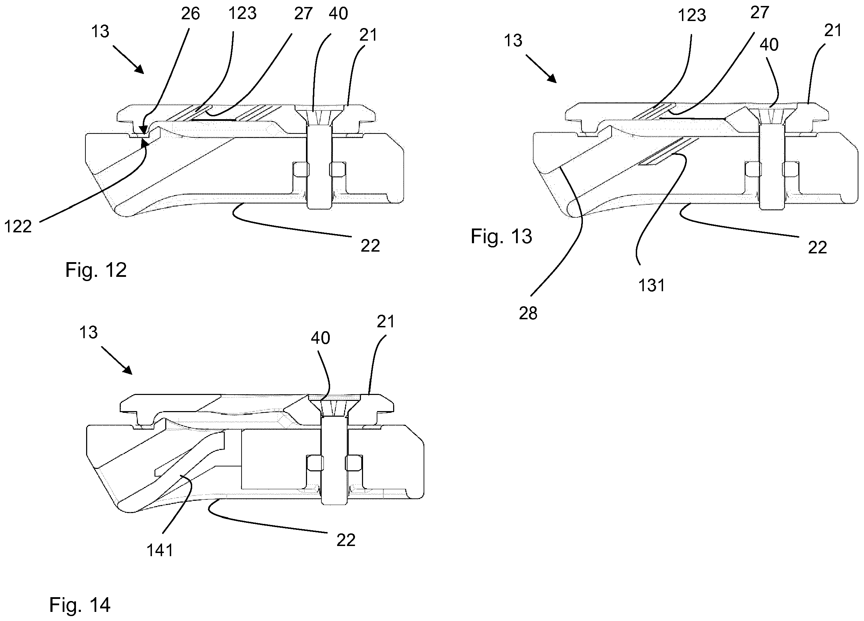

Fig. 12 zeigt ein weiteres bevorzugtes Ausführungsbeispiel, wobei der abgebildete Einsatz 13 im Wesentlichen dem Einsatz 10 entspricht. Das innenliegende Einsatzelement 22 ist hierbei mit einer umlaufenden Ausnehmung 122 gezeigt, welche dazu dient, den Steg 26 des ersten Einsatzelements 21 in der Halteposition aufzunehmen. Diese Ausnehmung 122 ist dabei vorteilhaft passgenau gegengleich zur Aufnahme des Steges 26 ausgebildet. In gleicher Weise ist auch der Einsatz 10 mit einer Ausnehmung zur Aufnahme des Steges ausgebildet. Auf diese Weise wird ein besonders stabiler, formschlüssiger Sitz des Einsatzes in der Halteposition erreicht, da die beiden Einsatzelemente auch zueinander formschlüssig und verdrehsicher angeordnet sind.

Zusätzlich ist bei dieser Ausführungsform die Innenwand der Durchgangsbohrung zur Durchführung des Kabels oder des Zuges, zumindest abschnittsweise, mit einer flexiblen Komponente 123 zur Abdichtung der Öffnung bei einem durchgeführten Kabel oder Zug ausgebildet. Diese flexible Komponente 123 ist auf der Innenseite der Durchgangsbohrung 27 angeordnet und verringert die lichte Weite. Bei Durchführung eines Kabels oder Zuges liegt die flexible Komponente 123 vorteilhaft eng an dem Kabel oder Zug an, so dass eine zusätzliche Abdichtung der Öffnung erreicht wird.

In Fig. 13 ist ein weiteres bevorzugtes Ausführungsbeispiel eines Einsatzes 13 gezeigt, bei dem flexible Komponenten 123, 131 in beiden Durchgangsbohrungen 27, 28 angeordnet sind.

Fig. 14 zeigt ein weiteres bevorzugtes Ausführungsbeispiel eines Einsatzes 13 mit einem elastischen Klemmelement 141 zur Fixierung eines durchgeführten Kabels oder Zuges, welches an der Innenseite der Durchgangsbohrung angeordnet ist.

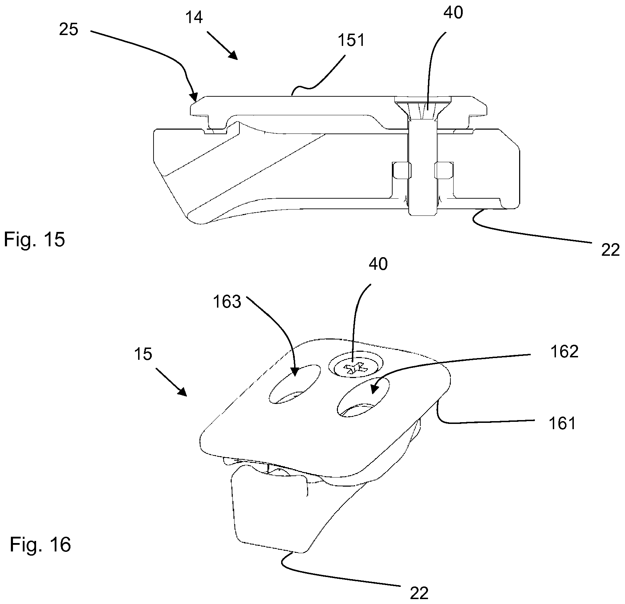

In Fig. 15 ist ein weiterer Einsatz 14 gezeigt, welcher als Deckel zur Abdeckung der Öffnung in dem Rohr verwendet werden kann. Der Einsatz 14 kann ein Einsatzelement 22 umfassen, welches im inneren des Rohrs angeordnet ist. Das erste Einsatzelement 151 ist dagegen als Deckel ausgebildet und weist demzufolge keine Durchgangsbohrung zur Durchführung eines Zuges oder eines Kabels auf. Besonders günstig ist es, wenn das erste Einsatzelement 151 einen umlaufenden Vorsprung oder Kragen 25 umfasst, welcher es ermöglicht, die Öffnung im Rohr vollständig und dicht abzudecken. Hierdurch ist gewährleistet, dass keine Schmutzpartikel oder Nässe in das Rohr eindringen können. Zugleich ist auch der ästhetische Eindruck des Rahmens im Bereich der Öffnung dadurch kaum beeinträchtigt. Das zur Abdeckung dienende erste Einsatzelement 151 kann mittels einer Schraube 40 mit dem zweiten Einsatzelement 22 in bekannter Weise befestigt werden. Hierdurch ist eine große Flexibilität für die Verwendung des Einsatzes gegeben, da bis auf das erste Einsatzelement 151 auch für den Deckel gleiche Teile verwendet werden können.

In Fig. 16 ist schließlich eine Weiterbildung der Erfindung mit einem Einsatz 15 gezeigt. Das erste Einsatzelement 161 des Einsatzes 15 umfasst zwei Durchgangsbohrungen 162, 163, um gleichzeitig zwei Züge oder zwei Kabel oder ein Kabel und einen Zug durch die Öffnung 6 führen zu können.

Es ist offensichtlich und für den Fachmann erkennbar, dass die verschiedenen Ausführungsformen und Gestaltungsmerkmale miteinander in unterschiedlicher Weise kombinierbar sind bzw. kombiniert werden können.

Der erfindungsgemäße Einsatz ermöglicht sowohl die Durchführung von mechanischen und/oder hydraulischen Zügen als auch von elektrischen Kabeln durch eine Öffnung in ein Rohr oder aus einem Rohr heraus. Er kann einfach und sicher an einem Rohrabschnitt, insbesondere an einer derartigen Öffnung eines Zweirad-Rahmens, befestigt werden. Der Einsatz kann auch als Deckel zum Abschließen der Öffnung verwendet werden.

Dabei sind keine besonderen Anforderungen die die Ausgestaltung der Öffnung in dem Rohr erforderlich, so dass diese Öffnung besonders einfach und kostengünstig gestaltet werden kann. Die Öffnung kann dabei ein Langloch sein.

In der Halteposition kann der Einsatz in der Öffnung befestigt werden, ohne dass eine zusätzliche auf den Zug wirkende Zugspannung erforderlich ist.

Der Einsatz kann ferner an unterschiedlichen Rahmen, etwa in Bezug auf das Material, den Durchmesser des Rohres oder dessen Wandstärke, befestigt werden.

Für eine Umrüstung kann der Einsatz einfach und schnell demontiert werden, woraufhin er auch erneut wieder montiert werden kann.

### Bezugszeichenliste:

- 1: Zweirad-Rahmen
- 2: Oberrohr
- 3: Unterrohr
- 4: Steuerrohr
- 5: Zug
- 6: Öffnung
- 7: Öffnung
- 8: Rohrabschnitt
- 10: Einsatz
- 12: Einsatz
- 13: Einsatz
- 14: Einsatz zur Abdeckung
- 15: Einsatz mit zwei Durchführungen
- 21: Erstes Einsatzelement
- 22: Zweites Einsatzelement
- 23: Klemmabschnitt
- 24: Klemmabschnitt
- 25: Kragen
- 26: Steg
- 27: Durchgangsbohrung
- 28: Durchgangsbohrung
- 29: Anschlag
- 30: Durchgangsbohrung
- 31: Durchgangsbohrung
- 32: Mutter
- 34: Mittenlinie des Rohrs
- 35: Mittenlinie der Durchgangsbohrung
- 36: Schenkel
- 37: Aufnahme
- 40: Schraube
- 61: Durchgangsbohrung
- 81: Erstes Einsatzelement
- 82: Zweites Einsatzelement
- 83: Durchgangsbohrung
- 84: Durchgangsbohrung mit Innengewinde
- 85: Kragen
- 86: Steg
- 87: Durchgangsbohrung
- 88: Klemmstück
- 111: Durchgangsbohrung
- 112: Durchgangsbohrung
- 113: Durchgangsbohrung
- 122: Ausnehmung
- 123: flexible Komponente
- 131: flexible Komponente
- 141: Klemmelement
- 151: Erstes Einsatzelement als Abdeckung
- 161: Erstes Einsatzelement mit zwei Durchführungen
- 162: Durchgangsbohrung
- 163: Durchgangsbohrung

## Patentansprüche

1. Einsatz (10, 12, 13, 14, 15) für eine Öffnung (6) an einem Rohr (8) eines Zweirad-Rahmens, wobei die Öffnung auf der Mantelfläche des Rohres angeordnet ist, umfassend
- zumindest eine Durchgangsbohrung (27, 28. 87) zur Durchführung eines Zuges, eines Kabels oder einer hydraulischen Leitung durch die Öffnung in das Rohr hinein oder aus dem Rohr heraus,
- ein erstes Einsatzelement (21, 81, 151, 161), welches in montierter Position im Wesentlichen außerhalb des Rohrs angeordnet ist,
- ein zweites Einsatzelement (22, 82), welches in montierter Position im Wesentlichen innerhalb des Rohrs angeordnet ist und dessen Seitenwände derart ausgebildet sind, um in die Öffnung zumindest teilweise eingeschoben werden zu können,
- ein Befestigungsmittel (40) zum Befestigen des ersten und des zweiten Einsatzelements miteinander, wobei
- das erste und das zweite Einsatzelement mittels des Befestigungsmittels derart miteinander verbunden sind, dass sie in einer ersten und in einer zweiten Position relativ zueinander gehalten werden können,
wobei die erste Position eine Montageposition zur Montage des zweiten Einsatzelements in der Öffnung (6) bestimmt und die zweite Position eine Halteposition der beiden Einsatzelemente zueinander festlegt, bei der das erste und das zweite Einsatzelement in montierter Position einen Abschnitt der Seitenwand des Rohrs, insbesondere einen Abschnitt angrenzend an die Öffnung, von innen und von außen klemmen, wodurch der Einsatz in der Öffnung gehalten wird,
**dadurch gekennzeichnet, dass**
zumindest das zweite Einsatzelement (22, 82), welches in montierter Position im Wesentlichen innerhalb des Rohrs angeordnet ist und dessen Seitenwände derart ausgebildet sind, um in die Öffnung zumindest teilweise eingeschoben werden zu können, in der zweiten Position, somit in der Halteposition, in welcher die beiden Einsatzelemente zueinander festlegt sind, im Vergleich zur ersten Position, somit der Montageposition, im Wesentlichen deformationsfrei bleibt, wobei die Formänderung des zweiten Einsatzelements in einer bestimmten Richtung eines kartesischen Koordinatensystems mit X, Y-, und Z-Achse, in welcher das jeweilige Einsatzelement angeordnet ist, in jeder Richtung dieses Koordinatensystems kleiner bleibt als 10 % der maximalen Abmessungen des Einsatzelements in dieser Richtung.

2. Einsatz (10, 12, 13, 14, 15) nach Anspruch 1, wobei der Einsatz mit einem gummielastischen Material im Kontaktbereich mit der Öffnung (7) ausgebildet ist.

3. Einsatz (10, 12, 13, 14, 15) nach einem der vorstehenden Ansprüche, wobei der Einsatz bei Rohren mit unterschiedlicher Wandstärke montiert werden kann, bevorzugt bei Rohren mit einer Wandstärke von 1 bis 4 mm, wobei der Abstand der beiden Einsatzelemente in Halteposition im Wesentlichen durch die geometrische Ausbildung der Unterseite des ersten Einsatzelementes und der Oberseite des zweiten Einsatzelements sowie die Wandstärke und die Krümmung des Rohres in montierter Position im Bereich der Öffnung
bestimmt ist.

4. Einsatz (10, 12, 13, 14, 15) nach einem der vorstehenden Ansprüche, wobei der Einsatz an Rohren aus unterschiedlichen Material, umfassend Aluminium,
Karbon oder faserverstärkten Kunststoff, verwendet werden kann.

5. Einsatz (10, 12, 13, 14, 15) nach einem der vorstehenden Ansprüche, wobei als Befestigungsmittel zur Befestigung des ersten und des zweiten Einsatzelements eine Schraube (40) vorgesehen ist.

6. Einsatz (10, 12, 13, 14, 15) nach einem der vorstehenden Ansprüche, wobei die Durchgangsbohrung mit einem Anschlag (29) zur Durchführung eines mechanischen Zugs versehen ist.

7. Einsatz (10, 12, 13, 14, 15) nach einem der vorstehenden Ansprüche, wobei der Einsatz zumindest eines der Materialien Aluminium, Kunststoff, faserverstärkten Kunststoff oder Mehrkomponentenkunststoff umfasst.

8. Zweirad-Rahmen (1), umfassend ein Rohr (34) eines Rahmenabschnitts mit zumindest einer Öffnung, welche zumindest einen Einsatz nach einem der vorstehenden Ansprüche zur Abdeckung der Öffnung und zur Durchführung eines mechanischen Zuges, eines Kabels und/oder einer hydraulischen Leitung von außen nach innen in den Rahmen oder umgekehrt von innerhalb des Rahmens nach außerhalb, umfasst, wobei das erste Einsatzelement einen kragenförmig umlaufenden Vorsprung aufweist, welcher in der Halteposition die Öffnung des Rohrs vollständig abdeckt.

9. Zweirad-Rahmen (1) nach vorstehendem Anspruch, wobei die Mittenlinie der Durchgangsbohrung (35) und die Mittenlinie des Rohrs (34) in montierter Position in einem Winkel zueinander stehen, welcher zwischen 10° und 45°, bevorzugt zwischen 15° und 40° beträgt.

10. Zweirad, umfassend einen Rahmen (1) nach einem der vorstehenden Ansprüche 8 oder 9.

11. Zweirad nach vorstehendem Anspruch, mit zumindest einem mechanischen Zug, einem Kabel und/oder einer hydraulischen Leitung, wobei der mechanische Zug und/oder das Kabel und/oder die hydraulische Leitung zumindest abschnittsweise außerhalb und zumindest in einem Abschnitt innerhalb des Rahmens (1) geführt werden, und wobei zur Durchführung in den Rahmen hinein oder aus dem Rahmen heraus ein Einsatz nach einem der vorstehenden Ansprüche 1 bis 7 vorgesehen ist.

## Claims

1. An insert (10, 12, 13, 14, 15) for an opening (6) on a tube (8) of a bicycle frame, wherein the opening is arranged on the lateral area of the tube, comprising
- at least one through hole (27, 28, 87) for passing a wire, a cable or a hydraulic line through the opening and into the tube or out of the tube,
- a first insert element (21, 81, 151, 161) which, in the mounted position, is arranged essentially outside the tube,
- a second insert element (22, 82) which, in the mounted position, is arranged essentially inside the tube and the side walls of which are formed such that they can be pushed into the opening at least in part,
- a fixing means (40) for fixing the first and second insert elements to each other, wherein
- the first and second insert elements are connected to each other via the fixing means such that they can be held relative to each other in a first position and in a second position, wherein the first position determines a mounting position for mounting the second insert element in the opening (6) and the second position defines a holding position of the two insert elements relative to each other in which, in the mounted position, the first and second insert elements clamp a section of the side wall of the tube, more particularly a section adjacent to the opening, from the inside and from the outside, whereby the insert is held in the opening,
**characterised in that**
at least the second insert element (22, 82) which, in the mounted position, is arranged essentially inside the tube and the side walls of which are formed such that they can be pushed into the opening at least in part essentially remains free from deformations in the second position, i.e., in the holding position, in which the two insert elements are located relative to each other, in comparison to the first position, i.e., the mounting position, wherein the change in shape of the second insert element in a specific direction of a Cartesian coordinate system with X-, Y-, and Z-axes, in which the respective insert element is arranged, remains less than 10 % of the maximum dimensions, in this direction, of the insert element in each direction of this coordinate system.

2. The insert (10, 12, 13, 14, 15) in accordance with Claim 1, wherein the insert is formed with a rubber-elastic material in the contact area with the opening (7).

3. The insert (10, 12, 13, 14, 15) in accordance with any one of the preceding claims, wherein the insert can be mounted in tubes having different wall thicknesses, preferably in tubes having a wall thickness of 1 to 4 mm, wherein, in the holding position, the distance between the two insert elements is essentially determined by the geometric design of the bottom side of the first insert element and the top side of the second insert element as well as by the wall thickness and the curvature of the tube in the mounted position in the vicinity of the opening.

4. The insert (10, 12, 13, 14, 15) in accordance with any one of the preceding claims, wherein the insert can be used on tubes that are made of different materials, comprising aluminium, carbon or fibre-reinforced plastic.

5. The insert (10, 12, 13, 14, 15) in accordance with any one of the preceding claims, wherein a screw (40) is provided as fixing means for fixing the first and second insert elements.

6. The insert (10, 12, 13, 14, 15) in accordance with any one of the preceding claims, wherein the through hole is provided with a stop (29) for passing through a mechanical wire.

7. The insert (10, 12, 13, 14, 15) in accordance with any one of the preceding claims, wherein the insert comprises at least one of the materials: aluminium, plastic, fibre-reinforced plastic, or multi component plastic.

8. A bicycle frame (1), comprising a tube (34) of a frame section having at least one opening which comprises at least one insert in accordance with any one of the preceding claims for covering the opening and for passing through a mechanical wire, a cable and/or a hydraulic line into the frame from outside or, vice versa, from inside the frame to the outside, wherein the first insert element has a collar-shaped circumferential projection which, in the holding position, completely covers the opening of the tube.

9. The bicycle frame (1) in accordance with the preceding claim, wherein, in the mounted position, the centre line of the through hole (35) and the centre line of the tube (34) form an angle relative to each other which is between 10° and 45°, preferably between 15° and 40°.

10. A bicycle, comprising a frame (1) in accordance with any one of the preceding Claims 8 or 9.

11. The bicycle in accordance with the preceding claim, with at least one mechanical wire, a cable and/or a hydraulic line, wherein the mechanical wire and/or the cable and/or the hydraulic line are run outside the frame (1) at least in certain sections and inside the frame (1) at least in one section, and wherein an insert in accordance with any one of the preceding Claims 1 to 7 is provided for the passing through into the frame or out of the frame.

## Revendications

1. Insert (10, 12, 13, 14, 15) pour une ouverture (6) sur un tube (8) d'un cadre de deux-roues, dans lequel l'ouverture est disposée sur la face d'enveloppe du tube, comprenant
- au moins un alésage de passage (27, 28, 87) pour la traversée d'un câble d'actionnement, d'un câble ou d'une conduite hydraulique à travers l'ouverture dans le tube ou hors du tube,
- un premier élément d'insert (21, 81, 151, 161) qui est disposé dans la position montée essentiellement en dehors du tube,
- un second élément d'insert (22, 82) qui est disposé dans la position montée essentiellement au sein du tube et dont les parois latérales sont réalisées de manière à pouvoir être au moins partiellement insérées dans l'ouverture,
- un moyen de fixation (40) pour la fixation du premier et du second élément d'insert l'un avec l'autre, dans lequel
- le premier et le second élément d'insert sont connectés l'un à l'autre au moyen du moyen de fixation de telle sorte qu'ils peuvent être maintenus dans une première et dans une seconde position l'un par rapport à l'autre, dans lequel la première position détermine une position de montage pour le montage du second élément d'insert dans l'ouverture (6) et la seconde position fixe une position de maintien des deux éléments d'insert l'un par rapport à l'autre dans laquelle le premier et le second élément d'insert serrent de l'intérieur et de l'extérieur dans la position montée une section de la paroi latérale du tube, notamment une section adjacente à l'ouverture, moyennant quoi l'insert est maintenu dans l'ouverture, **caractérisé en ce que**
au moins le second élément d'insert (22, 82), qui est disposé dans la position montée essentiellement au sein du tube et dont les parois latérales sont réalisées de manière à pouvoir être au moins partiellement insérées dans l'ouverture, reste essentiellement exempt de déformation dans la seconde position, par conséquent dans la position de maintien, dans laquelle les deux éléments d'insert sont fixés l'un par rapport à l'autre, par rapport à la première position, par conséquent la position de montage, dans lequel la modification de forme du second élément d'insert dans une certaine direction d'un système de coordonnées cartésien avec un axe X, Y et Z dans lequel l'élément d'insert respectif est disposé reste inférieure dans chaque direction de ce système de coordonnées à 10 % des dimensions maximales de l'élément d'insert dans cette direction.

2. Insert (10, 12, 13, 14, 15) selon la revendication 1, dans lequel l'insert est réalisé avec un matériau élastique en caoutchouc dans la zone de contact avec l'ouverture (7).

3. Insert (10, 12, 13, 14, 15) selon une des revendications précédentes, dans lequel l'insert peut être monté dans le cas de tubes avec différente épaisseur de paroi, de préférence dans le cas de tubes avec une épaisseur de paroi de 1 à 4 mm, dans lequel l'écart des deux éléments d'insert dans la position de maintien est déterminé essentiellement par la configuration géométrique du côté inférieur du premier élément d'insert et du côté supérieur du second élément d'insert ainsi que l'épaisseur de paroi et la courbure du tube dans la position montée dans la région de l'ouverture.

4. Insert (10, 12, 13, 14, 15) selon une des revendications précédentes, dans lequel l'insert peut être utilisé sur des tubes en différent matériau, comprenant l'aluminium, le carbone ou le plastique renforcé par des fibres.

5. Insert (10, 12, 13, 14, 15) selon une des revendications précédentes, dans lequel une vis (40) est prévue en tant que moyen de fixation pour la fixation du premier et du second élément d'insert.

6. Insert (10, 12, 13, 14, 15) selon une des revendications précédentes, dans lequel l'alésage de passage est pourvu d'une butée (29) pour la traversée d'un câble d'actionnement mécanique.

7. Insert (10, 12, 13, 14, 15) selon une des revendications précédentes, dans lequel l'insert comprend au moins un des matériaux aluminium, plastique, plastique renforcé par des fibres ou plastique multicomposants.

8. Cadre de deux-roues (1) comprenant un tube (34) d'une section de cadre avec au moins une ouverture qui comprend au moins un insert selon une des revendications précédentes pour le recouvrement de l'ouverture et pour la traversée d'un câble d'actionnement mécanique, d'un câble et/ou d'une conduite hydraulique de l'extérieur vers l'intérieur dans le cadre ou inversement de l'intérieur du cadre vers l'extérieur, dans lequel le premier élément d'insert présente une saillie périphérique en forme de rebord qui recouvre entièrement l'ouverture du tube dans la position de maintien.

9. Cadre de deux-roues (1) selon la revendication précédente, dans lequel la ligne centrale de l'alésage de passage (35) et la ligne centrale du tube (34) dans la position montée se situent à un angle l'une par rapport à l'autre qui est compris entre 10° et 45°, de préférence entre 15° et 40°.

10. Deux-roues comprenant un cadre (1) selon une des revendications précédentes 8 ou 9.

11. Deux-roues selon la revendication précédente, avec au moins un câble d'actionnement mécanique, un câble et/ou une conduite hydraulique, dans lequel le câble d'actionnement mécanique et/ou le câble et/ou la conduite hydraulique sont guidés au moins par sections en dehors et au moins dans une section au sein du cadre (1), et dans lequel un insert selon une des revendications précédentes 1 à 7 est prévu pour la traversée dans le cadre ou hors du cadre.
